# EUROPEAN PATENT SPECIFICATION

(11) **EP 3 883 227 B1**
(45) Date of publication and mention of the grant of the patent: **31.07.2024**
(21) Application number: 19896076.7
(22) Date of filing: 11.12.2019
(51) Int. Cl.: H04M 1/725, H04M 3/42, H04M 3/48, H04M 3/436, H04M 1/57, H04M 1/663

(54) **CALL PROCESSING METHOD AND DEVICE AND COMPUTER READABLE STORAGE MEDIUM**
VERFAHREN UND VORRICHTUNG ZUR RUFVERARBEITUNG UND COMPUTERLESBARES SPEICHERMEDIUM
PROCÉDÉ ET DISPOSITIF DE TRAITEMENT D'APPELS ET SUPPORT D'INFORMATIONS LISIBLE PAR ORDINATEUR

(30) Priority: 11.12.2018 CN 201811510134
(43) Date of publication of application: 22.09.2021
(73) Proprietor: ZTE Corporation, Shenzhen, Guangdong 518057 (CN)
(72) Inventor: YANG, Qiang, Shenzhen, Guangdong 518057 (CN)
(74) Representative: Zoli, Filippo
(86) International application number: PCT/CN2019/124489
(87) International publication number: WO 2020/119708

(56) References cited:
- WO-A1-98/27707
- CN-A- 101 072 401
- CN-A- 101 106 594
- CN-A- 101 646 137
- US-A- 6 014 434
- US-A1- 2009 225 960
- US-A1- 2013 005 315

## Description

### TECHNICAL FIELD

Embodiments of the present disclosure relate to, but are not limited to, a call processing method and a computer-readable storage medium.

### BACKGROUND

With the development of communication technology, there is an increasing demand by people for contacting each other by phone calls. But at the same time, people have often received all kinds of unwanted harassment phone calls. In order to prevent phone harassment, "caller identification", "call blocking", and other services have been put into practice. Intelligent terminals also support anti-harassment functions such as setting a "blacklist". However, there are still a large number of harassment phone calls being placed every day, and if subscribers simply reject all the phone calls from unknown callers, it may result in rejection of non-harassment phone calls. Therefore, the subscribers cannot effectively deal with phone calls from unknown callers.

US6014434 discloses a method for controlling and processing an incoming call of a line-busy exchange system, which includes: when a busy keyphone receives another incoming call, reading the telephone number of the incoming call, and displaying the telephone number on a display of the busy keyphone, so that the user of the busy keyphone can determine whether to maintain the current call or to cut off the current call to switch to the incoming call, thereby improving the service for answering the incoming call in the line-busy state. However, in US6014434, the callee terminal must be able to identify the calling part's identity information according to the calling part's telephone number. For an unknown number, it cannot be effectively dealt with by the callee terminal, thus being limited in applications.

### SUMMARY

At least one embodiment of the present disclosure provides a call processing method and a computer readable storage medium, to improve call processing effectiveness.

The features of the call processing method and the computer readable storage medium according to embodiments of the present disclosure are set out in the appended set of claims.

Additional features and advantages of the disclosure will be set forth in the subsequent description, and in part will become apparent from the description, or may be learned by practice of the disclosure. The purposes and other advantages of the disclosure can be realized and obtained by structures particularly noted in the description, the claims and the accompanying drawings.

### BRIEF DESCRIPTION OF DRAWINGS

The accompanying drawings are used to provide a further understanding of the technical schemes of the present disclosure and constitute a part of the description. The accompanying drawings are used to explain the technical schemes of the present disclosure together with the embodiments of the present disclosure, and do not constitute a restriction on the technical schemes of the present disclosure.
FIG. 1 is an architecture diagram of a calling system provided by an embodiment of the present disclosure;
FIG. 2 shows a call processing method (caller side, carrying prompt information) provided by an embodiment of the present disclosure;
FIG. 3a shows a call processing method (caller side, playing multimedia information) provided by an embodiment of the present disclosure;
FIG. 3b shows a call processing method (carrying a preset identifier) provided by an embodiment of the present disclosure;
FIG. 4 shows a call processing method (callee side) provided by an embodiment of the present disclosure;
FIG. 5 is a flow chart of a reattempt call initiated by an AS (application server) carrying a caller "business card" in an event of a call rejected according to an embodiment of the present disclosure;
FIG. 6 is a flow chart of a reattempt call initiated by an AS carrying a caller "business card" in an event of a call not answered according to an embodiment of the present disclosure;
FIG. 7 is a flowchart of a reattempt call initiated by an AS with the AS playing a voice/video message according to an embodiment of the present disclosure;
FIG. 8 is a flowchart of a reattempt call initiated by an AS with a caller playing a voice/video message according to an embodiment of the present disclosure;
FIG. 9 is a flowchart of a reattempt call with an AS sending text/image edited by a terminal according to an embodiment of the present disclosure;
FIG. 10 is a flowchart of a reattempt call with a terminal sending text/image according to an embodiment of the present disclosure;
FIG. 11 is a flowchart of a reattempt call with a terminal sending a voice/video message according to an embodiment of the present disclosure;
FIG. 12 is a flow chart of an initial call with text/image added by an AS according to an embodiment of the present disclosure;
FIG. 13 is a flowchart of an initial call initiated with an AS playing a voice/video message according to an embodiment of the present disclosure;
FIG. 14 is a flowchart of an initial call with a caller sending a voice/video message according to an embodiment of the present disclosure;
FIG. 15 is a flow chart of a callee rejection service according to an embodiment of the present disclosure;
FIG. 16 is a block diagram of a call processing device provided by an embodiment of the present disclosure; and
FIG. 17 is a block diagram of a computer readable storage medium provided by an embodiment of the present disclosure.

### DETAILED DESCRIPTION

In order to make the purposes, technical schemes and advantages of the disclosure clear, the embodiments of the disclosure will be described hereinafter in detail with reference to the accompanying drawings. It should be noted that any combinations of embodiments and features of the embodiments of the disclosure without conflict are possible.

The steps shown in the flowcharts of the drawings may be performed in a computer system, such as with a set of computer-executable instructions. Moreover, although a logical order is shown in the flowcharts, the steps shown or described may be performed, in some cases, in a different order than shown or described herein.

In an embodiment of the present disclosure, by sending prompt information, such as carrying prompt information in a call origination message (which helps a callee to identify a caller identity, calling purpose, etc.), or playing prompt information (at least one of video or audio information, such as a caller voice message, which also helps a callee identify the caller identity, calling purpose, etc.) during a calling process, the callee can decide whether to answer the call according to the prompt information so as to prevent non-harassment phone calls from being rejected when trying to reject harassment phone calls.

When an initial call is rejected or not answered for a long time (for example, there is no answer after a preset time duration, for example, 20 seconds or 1 minute, etc.), a reattempt call may be initiated, and the prompt information mentioned above may be carried when initiating the reattempt call, or prompt information may be played to the callee during the reattempt call. This can be provided to subscribers as a service, for example, referred to as reattempt call service. The preset time duration can be assigned a value as required.

The above prompt information may also be carried or the prompt information may be played to the callee when the initial call is being placed. This can be provided to subscribers as a service, for example, referred to as a call effectiveness enhancement service.

The above services will take effect only between a caller and a callee both having registered with the services, or as long as the caller has registered with the services; or both the caller and the callee have not registered and can use the services freely.

The call effectiveness enhancement service or reattempt call service can improve the call success rate for a calling subscriber and, after being widely used, may enable a callee to reject more harassing calls with more confidence. However, considering that some callees do not want to see information that callers want to input before the callees answer the call, the callees can restrict the use of the "call effectiveness enhancement" or "reattempt call" service by the callers. This can also be provided as a service, for example, a callee can register with a "reject caller call effectiveness enhancement" service. When the callee has registered with this service, a caller cannot initiate a reattempt call, or even if the caller initiates a reattempt call, prompt information will not be displayed on the callee side.

The prompt information mentioned above may be at least one of text, image, audio, or video information, and the audio information is, for example, a voice message. The text and image information may be displayed on a terminal as caller identification information.

The prompt information is edited by a calling subscriber on a caller application (APP) and brought to the callee by the caller APP with a call message, or played to the callee by the caller APP or a caller terminal, or edited on a service platform of an application server (AS) and brought to the callee by the AS with a call message, or played to the callee by a media server invoked by a caller AS.

The reattempt call can be carried out by the AS, that is, the AS initiates the reattempt call, or by the caller terminal (for example, by the caller APP), that is, the caller terminal initiates the reattempt call.

The callee may refuse to use the above services. It may be the callee AS that refuses the services, i.e. the callee AS refuses to display the prompt information and the reattempt call, or it may be the callee terminal that refuses the services, i.e. the callee terminal refuses to display the prompt information and the reattempt call.

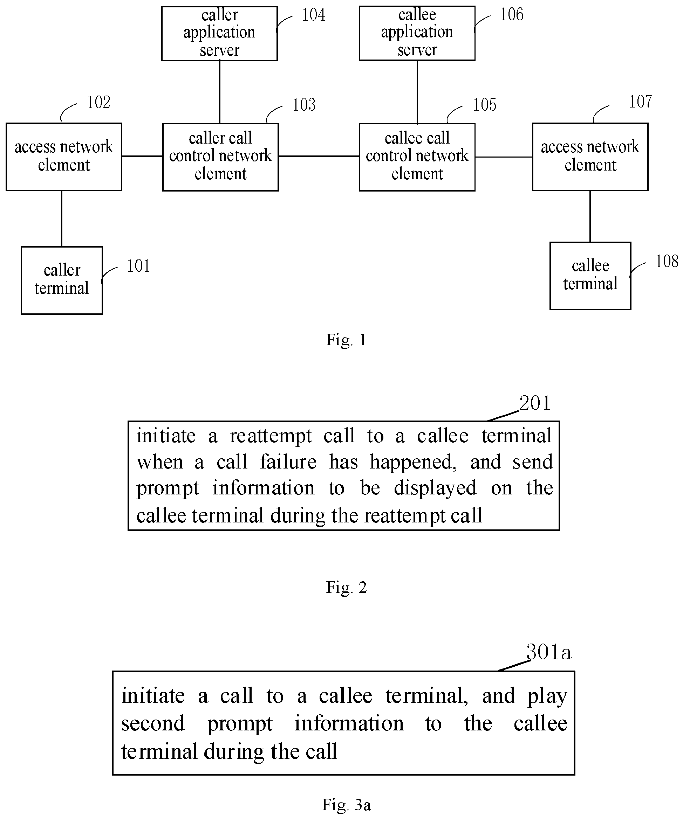

As shown in FIG. 1, a calling system architecture provided by an embodiment of the present disclosure includes a caller terminal 101, a caller-side access network element 102, a caller call control network element 103, a caller application server 104, a callee call control network element 105, a callee application server 106, a callee-side access network element 107, and a callee terminal 108. The caller application server 104 and the callee application server 106 may be one and the same application server.

As shown in FIG. 2, an embodiment of the present disclosure provides a call processing method, including: step 201, initiating a reattempt call to a callee terminal when a call failure has happened, and sending prompt information to be displayed on the callee terminal during the reattempt call.

According to the scheme provided by this embodiment, the prompt information helps the callee identify whether a call is harassment and then decide whether to answer the call, which can help subscribers effectively screen out harassment phone calls. In addition, sending prompt information during the reattempt call matches the custom of subscribers better, that is, if the subscriber answers the initial call, there is no need to transmit the prompt information.

During the reattempt call means before the called subscriber answers the call.

The prompt information includes at least one of: caller identity information or calling purpose information.

The prompt information includes at least one of: text information, image information, video information, or audio information. The audio information is audio information from the calling subscriber, for example. The video information is a video from the calling subscriber, for example. The text information is information that indicates identity and calling purpose of the calling subscriber, for example. The image information is a profile picture of the calling subscriber, for example.

The call failure includes: an initial call being rejected, or being not answered by the callee terminal within a preset time duration. The preset time duration is 20 s, 30 s, 50 s, etc. It should be noted that there can be one or more call failures.

In an embodiment, the prompt information is registered in a caller application server by the calling subscriber, or carried in a call attempt message of the initial call by a caller terminal.

In an embodiment, the reattempt call to the callee terminal is initiated by a caller application server or by a caller terminal. That is, the caller application server actively initiates a reattempt call after the initial call has failed; or, the caller terminal initiates a reattempt call after the initial call has failed.

The prompt information can include two kinds of information, one is text and image information that can be directly carried in a call origination message, which is referred to as first prompt information, and the other is audio and video information, etc., which is referred to as second prompt information. The second prompt information needs to apply for a media resource, or is played to the callee terminal after a media channel is established.

If the prompt information is the first prompt information, then in one embodiment, the sending prompt information to be displayed on the callee terminal during the reattempt call includes: carrying the prompt information in a call attempt message of the reattempt call.

In an embodiment, if the prompt information is the second prompt information, or includes the first prompt information and the second prompt information, then the sending prompt information to be displayed on the callee terminal during the reattempt call includes: playing the prompt information to the callee terminal during the reattempt call; or the prompt information including first prompt information and second prompt information, carrying the first prompt information in a call attempt message of the reattempt call; and playing the second prompt information to the callee terminal during the reattempt call.

In an embodiment, the playing the prompt information or the second prompt information to the callee terminal during the reattempt call includes: carrying a media resource in the call attempt message of the reattempt call; and after the callee terminal rings, playing the prompt information or the second prompt information to the callee terminal by using the media resource. The media resource is obtained by the caller application server through negotiation with a media server.

In an embodiment, the playing the prompt information or the second prompt information to the callee terminal during the reattempt call includes: carrying a first identifier in a call attempt message of the reattempt call, where the first identifier is adapted to instruct a callee side to return callee conversation media, and the first identifier can be assigned a value as required; and sending the prompt information or the second prompt information to the callee terminal based on the media channel according to the callee conversation media returned from the callee side.

The caller application server, after receiving the callee conversation media, establishes the conversation media channel between the caller terminal and the callee terminal, and a callee answer message or a provisional response message is returned to the caller terminal. When the caller terminal receives the callee answer message or receives the provisional response message and the media channel between the caller terminal and the callee terminal has been established, the prompt information or the second prompt information is sent to the callee terminal based on the media channel.

In an embodiment, the carrying a first identifier in the call attempt message of the reattempt call includes: carrying the first identifier in a call attempt message of a reattempt call initiated by a caller terminal, or carrying the first identifier in a call attempt message of a reattempt call initiated by a caller application server.

In an embodiment, the initiating a reattempt call to a callee when an initial call has failed includes: initiating a reattempt call to a callee terminal when an initial call has failed and a provisional response message or rejection message received does not carry a preset reattempt call restriction identifier. That is, a reattempt call will be initiated only when the callee terminal has not registered for rejection of reattempt calls; and if the callee terminal has registered for rejection of reattempt calls, no reattempt call will be initiated.

As shown in FIG. 3a, an embodiment of the present disclosure provides a call processing method, including: step 301a, initiating a call to a callee terminal, and playing second prompt information to the callee terminal during the call.

The call is an initial call or a reattempt call after the initial call has failed.

There are two ways to play the second prompt information to the callee terminal, one is that the caller application server uses the media server to play, and the other is that the caller terminal directly sends the prompt information to the callee terminal through the media channel. If the caller application server uses the media server to play, the caller application server first negotiates a media resource with the media server and sends the media resource to the callee terminal. If the caller terminal directly sends the prompt information to the callee terminal, the callee terminal returns conversation media. They are explained separately hereinafter.

In an embodiment, the playing second prompt information to the callee terminal during the initial call includes: carrying a media resource in a call attempt message of the initial call; and after the callee terminal rings, playing the second prompt information to the callee terminal by using the media resource.

In an embodiment, the second prompt information is registered in a caller application server.

In an embodiment, the playing second prompt information to the callee terminal during the initial call includes: carrying a second identifier in a call attempt message of the initial call, where the second identifier is adapted to instruct a callee side to return conversation media, where the second identifier can be assigned a value as required, which can be the same as or different from the value of the first identifier; and the caller terminal sends the second prompt information to the callee terminal based on a media channel that has been established between a caller terminal and the callee terminal by the caller application server according to the conversation media returned from the callee side.

In an embodiment, the carrying a second identifier in a call attempt message of the initial call includes: carrying the second identifier in the call attempt message of the initial call by the caller terminal, or carrying the second identifier in the call attempt message of the initial call by the caller application server.

In an embodiment, the call attempt message of the initial call further carries first prompt information to be displayed on the callee terminal.

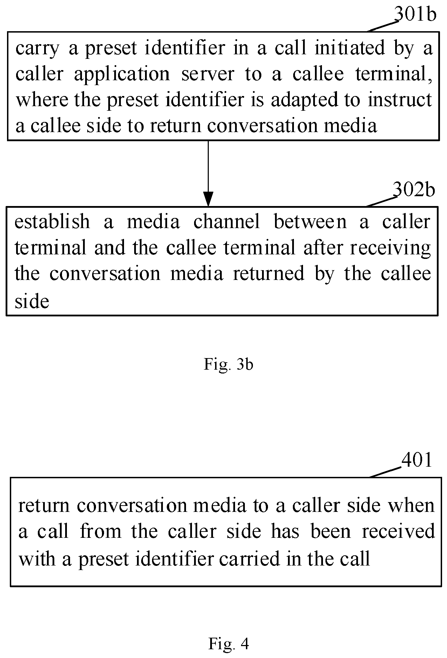

As shown in FIG. 3b, an embodiment of the present disclosure provides a call processing method, including: step 301b, carrying a preset identifier in a call initiated by a caller application server to a callee terminal, where the preset identifier is adapted to instruct a callee side to return conversation media; and step 302b, establishing a media channel between a caller terminal and the callee terminal by the caller application server after receiving the conversation media returned by the callee side.

The preset identifier is, for example, a first identifier or a second identifier.

The caller application server sends a callee answer message to the caller terminal, or sends a provisional response message to the caller terminal.

The call is an initial call or a reattempt call after the initial call has failed.

As shown in FIG. 4, an embodiment of the present disclosure provides a call processing method, including: step 401, returning conversation media to a caller side when a call from the caller side has been received with a preset identifier carried in the call.

The preset identifier is, for example, a first identifier or a second identifier.

In an embodiment, the returning conversation media to a caller side includes: returning, by a callee terminal or a callee application server, the conversation media to the caller side.

The present disclosure is further illustrated by application examples below.

### Application Example I. (Call rejected, reattempt call by AS carrying a caller "business card", i.e., prompt information)

Registration for a "reattempt call" service is firstly made in a service system of an operator, and display information intended to be displayed to a callee in a reattempt call is edited, which can be text or photos.

In this embodiment, when a call is rejected, an application server initiates a reattempt call. A call attempt message of the reattempt call carries customized prompt information edited by a calling subscriber, which can be text information or image information (such as a photo).

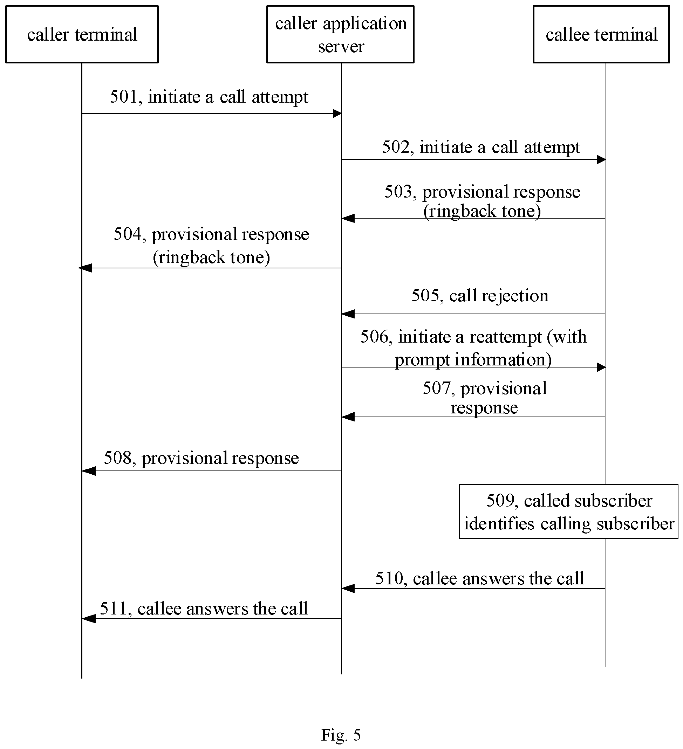

As shown in FIG. 5, the flow chart includes the following steps.

At step 501, a caller terminal initiates a call, and a "reattempt call" service is triggered in the process of the call.

At step 502, a caller application server (AS) initiates a call to a callee terminal.

The caller application server is a server that supports the reattempt call service.

At step 503, the callee terminal rings and returns a provisional response (ringback tone or ringback music) to the caller application server.

At step 504, the caller application server returns a provisional response (ringback tone or ringback music) to the caller terminal.

At step 505, a called subscriber rejects the call, and the callee terminal returns a call rejection message to the caller application server.

The reason for the rejection of the called subscriber may be that an unknown number is displayed and the called subscriber thinks it is a harassment phone call.

At step 506, the caller application server initiates a reattempt call to the callee terminal, and prompt information is carried in a call attempt (or call initiation) message.

The prompt information is customized prompt information edited by a calling subscriber in the "reattempt call" service to indicate identity or calling purpose, etc.

At step 507, the callee terminal rings and returns a provisional response (ringback tone or ringback music) to the caller application server.

At step 508, the caller application server returns a provisional response (ringback tone or ringback music) to the caller terminal.

In other embodiments, step 508 may be omitted according to actual situations.

At step 509, the called subscriber decides to answer the call based on the prompt information.

At step 510, the callee terminal answers and returns a callee answer message to the caller application server.

At step 511, the caller application server returns the callee answer message to the caller terminal, and the caller terminal and the callee terminal start a conversation.

### Application Example II. (Call not answered, reattempt call by AS carrying a caller "business card")

Registration for a "reattempt call" service is firstly made in a service system of an operator, and prompt information intended to be displayed to a callee in a reattempt call is edited, which can be text or photos and other display contents.

In this embodiment, when a call is rejected or "not answered", a caller application server initiates a reattempt call. A call attempt message of the reattempt call carries customized prompt information edited by a caller, which can be text information or image information (such as a photo).

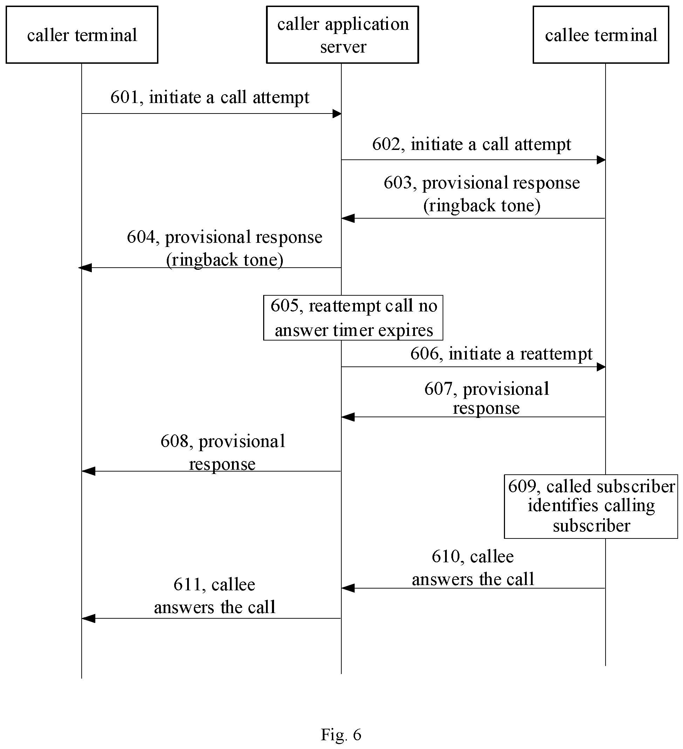

As shown in FIG. 6, the flow chart includes the following steps.

At step 601, a caller terminal initiates a call, and a "reattempt call" service is triggered in the process of the call.

At step 602, a caller application server initiates a call to a callee terminal.

The caller application server is a server that supports the reattempt call service.

At step 603, the callee terminal rings and returns a provisional response (ringback tone or ringback music) to the caller application server.

At step 604, the caller application server returns a provisional response (ringback tone or ringback music) to the caller terminal.

At step 605, the callee terminal does not answer. The reason may be that an unknown number is displayed and the called subscriber thinks it is a harassment phone call. When a reattempt call timer expires, step 606 is performed. The timing of the reattempt call timer is, for example, 20 s, which is only an example here and can be assigned other values as required.

At step 606, the caller application server initiates a reattempt call to the callee terminal, and prompt information is carried in a call attempt (or call initiation) message of the reattempt call.

The prompt information is, for example, customized prompt information edited by a calling subscriber in the reattempt call service to indicate caller identity or calling purpose, etc.

At step 607, the callee terminal rings and returns a provisional response (ringback tone or ringback music) to the caller application server.

At step 608, the caller application server returns a provisional response (ringback tone or ringback music) to the caller terminal.

In other embodiments, step 609 may be omitted according to actual situations.

At step 609, the called subscriber decides to answer the call based on the prompt information.

At step 610, the called subscriber answers, and the callee terminal returns a callee answer message to the caller application server.

At step 611, the caller application server, after receiving the callee answer message, returns the callee answer message to the caller terminal, and the caller terminal and the callee terminal start a conversation.

### Application Example III. (Reattempt call, AS playing voice/video message)

Registration for a "reattempt call" service is firstly made in a service system of an operator, and voice prompt information or video display information intended to be played to a callee in a reattempt call is edited, to which text or photos and other display contents may be added.

In this embodiment, when a call is rejected or "not answered", a caller application server initiates a reattempt call. The caller application server negotiates or obtains a media resource for playing the voice or video contents edited by the calling subscriber before initiating the reattempt call. A call attempt message of the reattempt call may also carry customized prompt information edited by a caller, (text/image information, such as a photo). Of course, the prompt information may not be carried.

In the process of the call, a media (voice/video) server needs to be accessed, and the media server plays the voice or video prompt to the called subscriber.

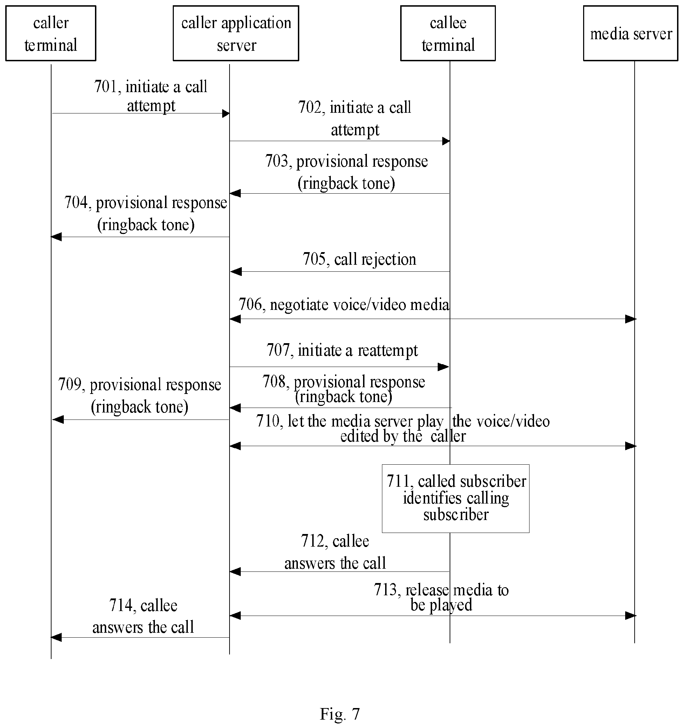

As shown in FIG. 7, the flow chart includes the following steps.

At step 701, a caller terminal initiates a call, and a "reattempt call" service is triggered in the process of the call.

At step 702, a caller application server initiates a call to a callee terminal.

At step 703, the callee terminal rings and returns a provisional response (ringback tone or ringback music) to the caller application server.

At step 704, the caller application server returns a provisional response (ringback tone or ringback music) to the caller terminal.

At step 705, a called subscriber rejects the call, and the callee terminal returns a call rejection message to the caller application server.

The reason for the rejection of the called subscriber may be that an unknown number is displayed and the called subscriber thinks it is a harassment phone call.

It should be noted that in this embodiment, step 705 may also be that the callee terminal has not answered for longer than a preset time duration.

At step 706, the caller application server decides to initiate a reattempt call. The caller application server negotiates with a media server to obtain a media resource, which is used to play voice/video contents that a calling subscriber wants to play to the called subscriber before the called subscriber answers the call.

At step 707, the caller application server initiates a reattempt call to the callee terminal. The applied media resource information is carried in a call attempt (or call initiation) message. The call attempt message may also carry customized prompt information (referred to as first prompt information in this embodiment) edited by the calling subscriber in the "reattempt call" service to indicate identity or calling purpose, etc. Of course, in another embodiment, the caller application server does not carry the first prompt information in the call attempt message.

At step 708, the callee terminal rings and returns a provisional response (ringback tone or ringback music) to the caller application server.

At step 709, the caller application server returns a provisional response (ringback tone or ringback music) to the caller terminal.

In other embodiments, step 409 may be omitted according to actual situations.

At step 710, the media server plays second prompt information (at least one of voice information or video information) edited by the calling subscriber in the "reattempt call" service to the callee terminal.

At step 711, the called subscriber decides to answer the call based on the played second prompt information (the at least one of voice information or video information) and the first prompt information.

The first prompt information includes caller identity information, calling purpose information, etc.

At step 712, the called subscriber answers, and the callee terminal returns a callee answer message to the caller application server.

At step 713, the caller application server releases the media to be played.

At step 714, the caller application server carries callee conversation media (if has not been carried before) in the callee answer message to be sent to the caller terminal, and the caller terminal and the callee terminal start a conversation.

### Application Example IV. (Reattempt call, initiated by AS, caller playing voice/video message)

In this embodiment, registration for a "reattempt call" service is firstly made in a service system of an operator, and the service is implemented by connecting a caller voice or video message during ringing.

When a call is rejected or "not answered", an application server initiates a reattempt call.

In a process of a provisional response of the "reattempt call", media negotiation between a caller and a callee is completed (a callee side network element knows that it is a "reattempt call", and a 180 message returned to the caller carries conversation media negotiation information of the callee side).

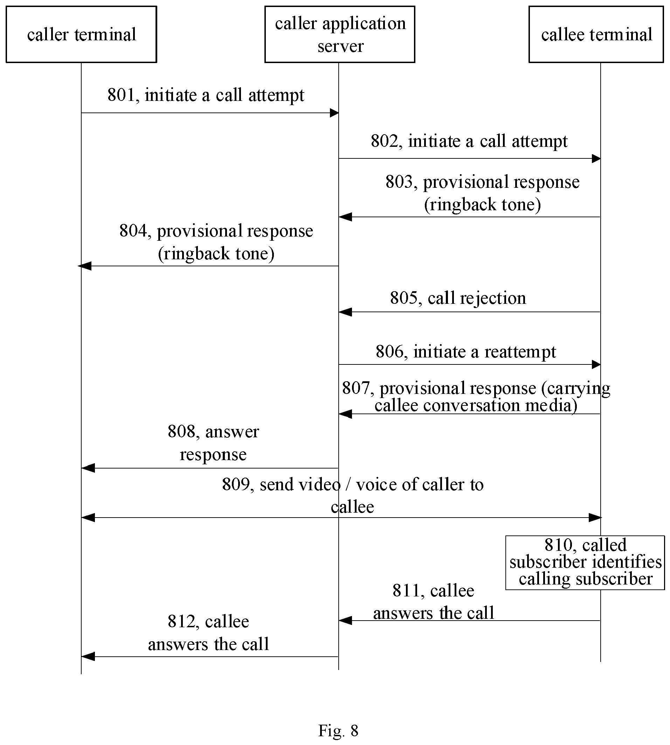

As shown in FIG. 8, the flow chart includes the following steps.

At step 801, a caller terminal initiates a call, and a "reattempt call" service is triggered in the process of the call.

At step 802, a caller application server initiates a call to a callee.

The caller application server is a server that can realize the reattempt call service.

At step 803, the callee terminal rings and returns a provisional response (ringback tone or ringback music) to the caller application server.

At step 804, the caller application server returns a provisional response (ringback tone or ringback music) to the caller terminal.

At step 805, a called subscriber rejects the call, and the callee terminal returns a call rejection message to the caller application server.

The reason for the rejection of the called subscriber may be that an unknown number is displayed and the called subscriber thinks it is a harassment phone call.

It should be noted that in this embodiment, step 705 may also be that the callee terminal has not answered for longer than a preset time duration.

At step 806, the caller application server initiates a reattempt call to the callee terminal. A preset identifier (also referred to as a reattempt call identifier) is carried in a call attempt (or call initiation) message.

The reattempt call identifier can be configured as required.

At step 807, a callee application server or the callee terminal carries callee conversation media in a provisional response message returned to the caller application server according to the reattempt call identifier or based on the related media negotiation technology.

At step 808, the caller application server receives the provisional response message for the reattempt call, and the provisional response message carries the callee conversation media, and sends a callee answer message (carrying the callee conversation media) to the caller terminal, or sends the provisional response message to the caller terminal and connects a media channel for the caller terminal to send media to the callee terminal.

At step 809, the caller terminal sends second prompt information (at least one of voice information or video information) to the callee terminal.

At step 810, the callee terminal decides to answer the call based on the second prompt information sent from the caller side.

At step 811, the called terminal answers, and the callee terminal returns a callee answer message to the caller application server.

At step 812, the caller application server returns the callee answer message to the caller terminal, and the caller terminal and the callee terminal start a conversation. In another embodiment, the step that the caller application server returns the callee answer message to the caller terminal may also be omitted.

### Application Example V. (Reattempt call, AS sending text/image edited by terminal)

Registration for a "reattempt call" service is firstly made in a service system of an operator, and the service is implemented by editing a text or image message at a terminal.

In this embodiment, when a call is rejected or "not answered", a caller application server initiates a reattempt call.

In the process of the call, in an initial call, a caller terminal sends prompt information (text or image) to an application server (supporting the reattempt call service). In a reattempt call, the application server sends prompt information (text or image) to a callee.

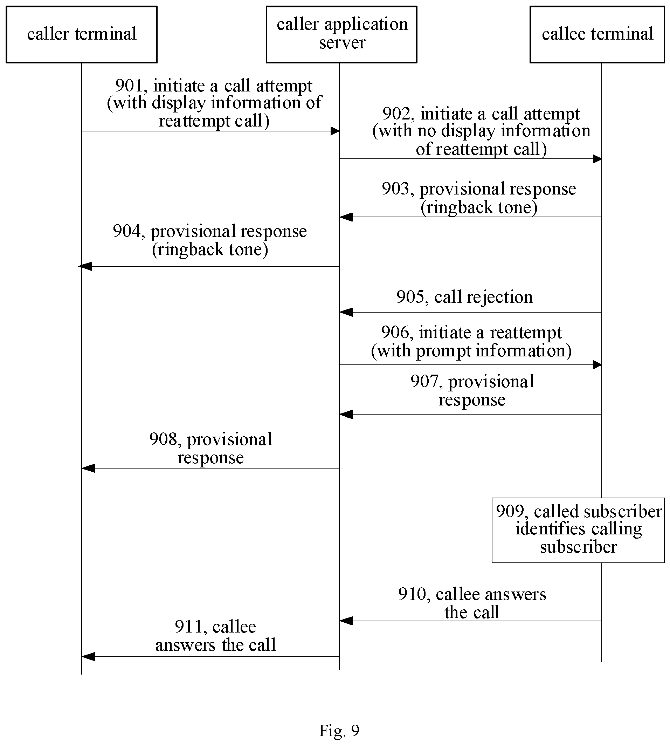

As shown in FIG. 9, the flow chart includes the following steps.

At step 901, a caller terminal initiates a call, and a "reattempt call" service is triggered in the process of the call. Prompt information, such as a text or image message, edited by the caller terminal for the reattempt call is carried in a call attempt message.

At step 902, a caller application server initiates a call to a callee terminal.

At step 903, the callee terminal rings and returns a provisional response (ringback tone or ringback music) to the caller application server.

At step 904, the caller application server returns a provisional response (ringback tone or ringback music) to the caller terminal.

At step 905, a called subscriber rejects the call, and the callee terminal returns a call rejection message to the caller application server.

The reason for the rejection of the called subscriber may be that an unknown number is displayed and the called subscriber thinks it is a harassment phone call.

It should be noted that in this embodiment, step 905 may also be that the callee terminal has not answered for longer than a preset time duration.

At step 906, the caller application server initiates a reattempt call to the callee terminal. The prompt information carried by the caller terminal in the call attempt message in step 901 is carried in a call attempt (or call initiation) message to indicate identity or calling purpose, etc. That is, the prompt information includes caller identity information, calling purpose information, etc.

At step 907, the callee terminal rings and returns a provisional response (ringback tone or ringback music) to the caller application server.

At step 908, the caller application server returns a provisional response (ringback tone or ringback music) to the caller terminal.

In other embodiments, step 908 may be omitted according to actual situations.

At step 909, the called subscriber decides to answer the call based on the prompt information.

At step 910, the called subscriber answers, and the callee terminal returns a callee answer message to the caller application server.

At step 911, the caller application server returns the callee answer message to the caller terminal, and the caller terminal and the callee terminal start a conversation.

### Application Example VI. (Reattempt call, terminal sending text/image)

Registration for a "reattempt call" service is firstly made in a service system of an operator, and the service is implemented by sending a text or image message at a terminal.

In this embodiment, when a call is rejected or "not answered", a caller terminal (calling APP) initiates a reattempt call.

In the process of a provisional response of the "reattempt call", when the caller terminal initiates a call, the edited text or image is carried in a message.

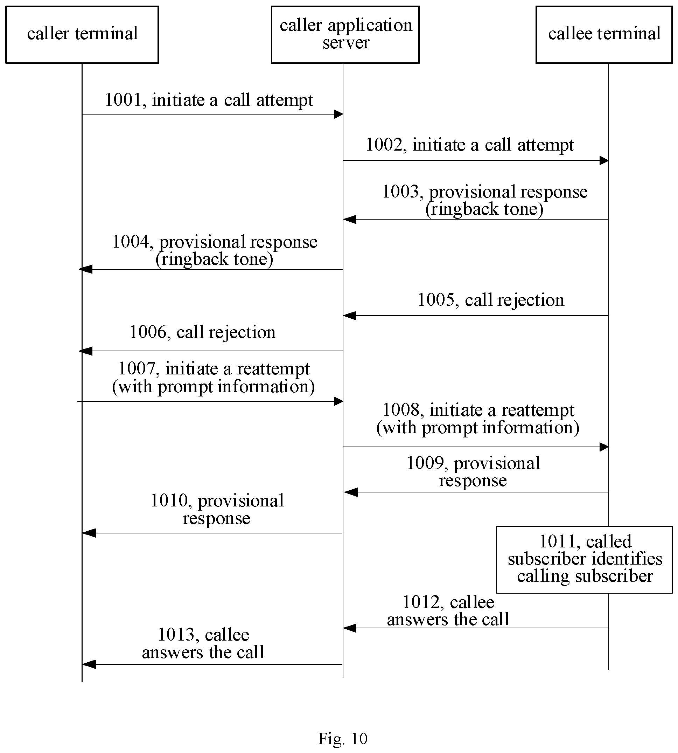

As shown in FIG. 10, the flow chart includes the following steps.

At step 1001, a caller terminal initiates a call, and a "reattempt call" service is triggered in the process of the call.

At step 1002, a caller application server initiates a call to a callee terminal.

At step 1003, the callee terminal rings and returns a provisional response (ringback tone or ringback music) to the caller application server.

At step 1004, the caller application server returns a provisional response (ringback tone or ringback music) to the caller terminal.

At step 1005, a called subscriber rejects the call, and the callee terminal returns a callee rejection message to the caller application server.

The reason for the rejection of the called subscriber may be that an unknown number is displayed and the called subscriber thinks it is a harassment phone call.

At step 1006, the caller application server returns the callee rejection message to the caller terminal.

It should be noted that the above step 1005 and step 1006 may also be replaced by: the callee terminal has not answered for longer than a preset time duration.

At step 1007, the caller terminal (calling APP) automatically initiates a reattempt call to the callee terminal. Personalized prompt information edited by the caller in the "reattempt call" service is carried in a call attempt (or call initiation) message to indicate identity or calling purpose, etc.

At step 1008, the caller application server forwards the reattempt call to the callee terminal, carrying the prompt information.

At step 1009, the callee terminal rings and returns a provisional response (ringback tone or ringback music) to the caller application server.

At step 1010, the caller application server returns a provisional response (ringback tone or ringback music) to the caller terminal.

At step 1011, the called subscriber decides to answer the call based on the prompt information.

At step 1012, the callee terminal answers and returns a callee answer message to the caller application server.

At step 1013, the caller application server returns the callee answer message to the caller terminal, and the caller terminal and the callee terminal start a conversation.

### Application Example VII. (Reattempt call, terminal sending voice/video message)

Registration for a "reattempt call" service is firstly made in a service system of an operator, and the service is implemented by sending a voice/video message at a terminal.

In this embodiment, when a call is rejected or "not answered", a caller terminal (calling APP) initiates a reattempt call.

In a process of a provisional response of the "reattempt call", an application server adds a "reattempt call" service identifier, so as to complete media negotiation between a caller and a callee (a callee side network element knows that it is a "reattempt call", and a 180 message returned to the caller carries conversation media negotiation information of the callee side).

In the process of the reattempt call, after the callee rings, the media (a voice or video message) sent from the caller side to the callee is connected.

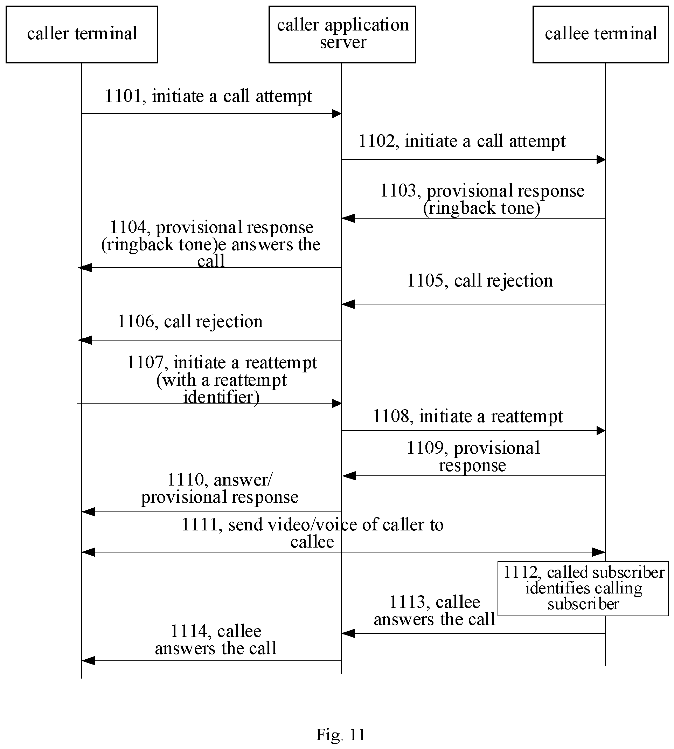

As shown in FIG. 11, the flow chart includes the following steps.

At step 1101, a caller terminal initiates a call, and a "reattempt call" service is triggered in the process of the call.

At step 1102, a caller application server initiates a call to a callee terminal.

At step 1103, the callee terminal rings and returns a provisional response (ringback tone or ringback music) to the caller application server.

At step 1104, the caller application server returns a provisional response (ringback tone or ringback music) to the caller terminal.

At step 1105, a called subscriber rejects the call, and the callee terminal returns a callee rejection message to the caller application server.

The reason for the rejection of the called subscriber may be that an unknown number is displayed and the called subscriber thinks it is a harassment phone call.

At step 1106, the caller application server returns the callee rejection message to the caller terminal.

It should be noted that the above step 1105 and step 1106 may also be replaced by: the callee terminal has not answered for longer than a preset time duration.

At step 1107, the caller terminal (calling APP) automatically initiates a reattempt call to the callee. A preset reattempt call identifier is carried in a call attempt (or call initiation) message, so that the callee terminal side can carry the conversation media in a provisional response. The preset reattempt call identifier can be configured as required.

At step 1108, the caller application server forwards the reattempt call to the callee terminal.

At step 1109, the callee terminal identifies the preset reattempt call identifier, and carries callee conversation media in a provisional response message returned to the caller application server.

At step 1110, after receiving the provisional response message carrying the callee conversation media, the caller application server returns a callee answer message to the caller terminal, or returns the provisional response message to the caller terminal and connects a conversation media channel from the caller terminal to the callee terminal.

At step 1111, the caller terminal sends second prompt information (at least one of voice information or video information) to the callee terminal.

At step 1112, the called subscriber decides to answer the call based on the voice or video information and other information sent by the caller terminal.

At step 1113, the called subscriber answers, and the callee terminal returns a callee answer message to the caller application server.

At step 1114, the caller application server returns the callee answer message to the caller terminal, and the caller terminal and the callee terminal start a conversation. In another embodiment, the step that the caller application server returns the callee answer message to the caller terminal may also be omitted.

### Application Example VIII. (Initial call, AS adding text/image)

Registration for a "call effectiveness enhancement" service is firstly made in a service system of an operator, and display information intended to be displayed to a callee is edited, which can be text or photos and other display contents.

In this embodiment, after receiving the "call attempt" message from the caller, an application server of the "call effectiveness enhancement" service adds customized prompt information edited by the caller to the "call attempt" message when forwarding the " call attempt" message. The prompt information can be text information or image information (such as a photo).

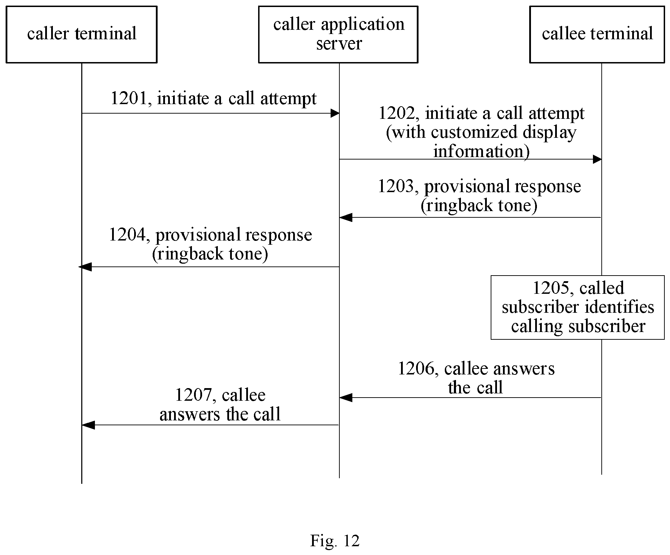

As shown in FIG. 12, the flow chart includes the following steps.

At step 1201, a caller terminal initiates a call, and a "call effectiveness enhancement" service is triggered in the process of the call.

At step 1202, a caller application server initiates a call to a callee terminal. Personalized prompt information edited by a calling subscriber is added to the call attempt message. The prompt information can be text information or image information (such as a photo). The prompt information includes, for example, at least one of caller identity information or calling purpose information.

At step 1203, the callee terminal rings and returns a provisional response (ringback tone or ringback music) to the caller application server.

At step 1204, the caller application server returns a provisional response (ringback tone or ringback music) to the caller terminal.

At step 1205, the called subscriber decides to answer the call based on the prompt information (caller identity information, calling purpose information, etc.).

At step 1206, the called subscriber answers, and the callee terminal returns a callee answer message to the caller application server.

At step 1207, the caller application server returns the callee answer message to the caller terminal, and the caller terminal and the callee terminal start a conversation.

### Application Example IX. (Initial call, AS playing voice/video message)

Registration for a "call effectiveness enhancement" service is firstly made in a service system of an operator, and voice prompt information or video display information intended to be played to a callee is edited, to which text or photos and other display contents may be added.

In this embodiment, before forwarding a "call attempt" message initiated by a caller, an application server of the "call effectiveness enhancement" first negotiates or obtains a media resource for playing second prompt information (at least one of voice information or video information) edited by a calling subscriber. The forwarded call attempt message may carry customized first prompt information (text/photo) edited by the caller.

In the process of the call, a media (voice/video) server needs to be accessed, and the media server plays the voice or video prompt to the callee.

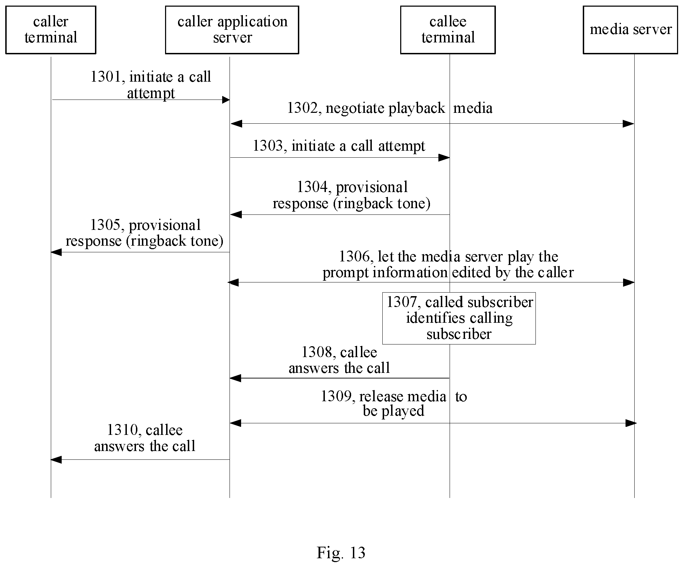

As shown in FIG. 13, the flow chart includes the following steps.

At step 1301, a caller terminal initiates a call, and a "call effectiveness enhancement" service is triggered in the process of the call.

At step 1302, a caller application server receives a call attempt message from the caller terminal. The caller application server first negotiates with a media server to obtain a media resource, which is used to play second prompt information that a caller wants to play to a called subscriber before the called subscriber answers the call.

At step 1303, the caller application server sends a call attempt (or call initiation) message to a callee terminal, and the call attempt message carries the applied media resource information. The call attempt message may also carry customized first prompt information edited by the calling subscriber in the "call effectiveness enhancement" service to indicate caller identity or calling purpose, etc. Of course, in another embodiment, the call attempt message does not carry the first prompt information.

At step 1304, the callee terminal rings and returns a provisional response (ringback tone or ringback music) to the caller application server.

At step 1305, the caller application server returns a provisional response (ringback tone or ringback music) to the caller terminal.

At step 1306, the media server plays second prompt information edited by the calling subscriber in the "call effectiveness enhancement" service to the callee terminal.

At step 1307, the called subscriber decides to answer the call based on the played second prompt information and the first prompt information.

At step 1308, the called subscriber answers, and the callee terminal returns a callee answer message to the caller application server.

At step 1309, the caller application server releases the media to be played.

At step 1310, the caller application server carries callee conversation media (if has not been carried before) in the callee answer message to be sent to the caller, and the caller terminal and the callee terminal start a conversation.

### Application Example X. (Initial call, caller sending voice/video message)

Registration for a "call effectiveness enhancement" service is firstly made in a service system of an operator, and the service is implemented by sending a voice/video message at a terminal.

In this embodiment, an application server of the "call effectiveness enhancement" adds a second identifier (or referred to as an effectiveness enhancement identifier) in a "call attempt" message to be forwarded from the caller, so as to complete media negotiation between a caller and a callee (a callee side network element knows that it is the "call effectiveness enhancement" service, and a 180 message returned to the caller carries callee conversation media of the callee side). The preset identifier can be configured as required, which can be the same as or different from the first identifier in the reattempt call.

In the process of the reattempt call, after the callee rings, the media (a voice or video message) sent from the caller side to the callee is connected.

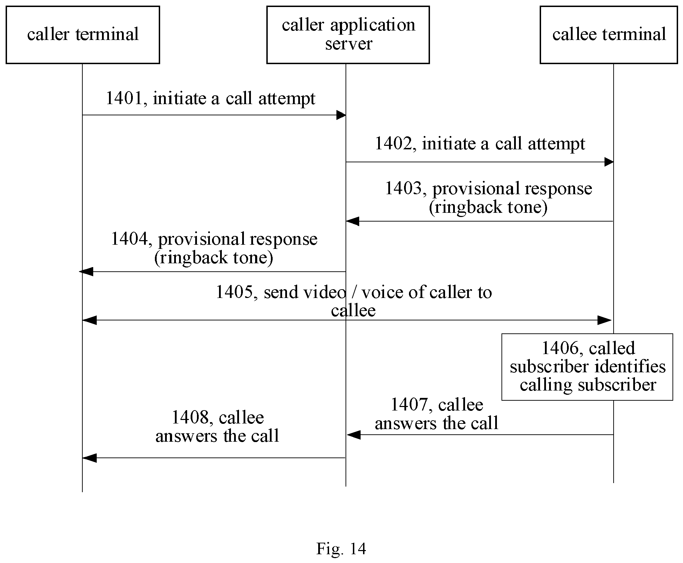

As shown in FIG. 14, the flow chart includes the following steps.

At step 1401, a caller terminal initiates a call, and a "call effectiveness enhancement" service is triggered in the process of the call.

At step 1402, a caller application server initiates a call to a callee terminal. A preset call effectiveness enhancement identifier is carried in a call attempt (or call initiation) message, so that the terminal side can carry the callee conversation media in a provisional response.

At step 1403, the callee terminal identifies the call effectiveness enhancement identifier, and carries callee conversation media in a provisional response message returned.

At step 1404, after receiving the provisional response message carrying the callee conversation media, the caller application server returns a callee answer message (playing ringback tone or ringback music) to the caller terminal, or returns the provisional response message to the caller terminal and connects a media channel from the caller terminal to the callee terminal.

At step 1405, the caller terminal sends second prompt information to the callee terminal.

At step 1406, the called subscriber decides to answer the call based on the displayed information such as caller identity, calling purpose, voice or video information.

At step 1407, the called subscriber answers, and the callee terminal returns a callee answer message to the caller application server.

At step 1408, the caller application server returns the callee answer message to the caller terminal, and the caller terminal and the callee terminal start a conversation.

It should be noted that, in another embodiment, the step that the caller application server returns the callee answer message to the caller terminal may be omitted.

### Application Example XI (Callee rejection service)

The "call effectiveness enhancement" service or "reattempt call" service can indeed improve the call success rate for a calling subscriber and, after being widely used, may enable a called subscriber to reject more "harassment" calls with more confidence. However, considering that some callees do not want to see information that callers want to input before the callees answer the call, in this embodiment, the callees can restrict the use of the "call effectiveness enhancement" or "reattempt call" service by the callers through service registration. "No reattempt call" can be carried by a calling APP or a called AS in a 18x message.

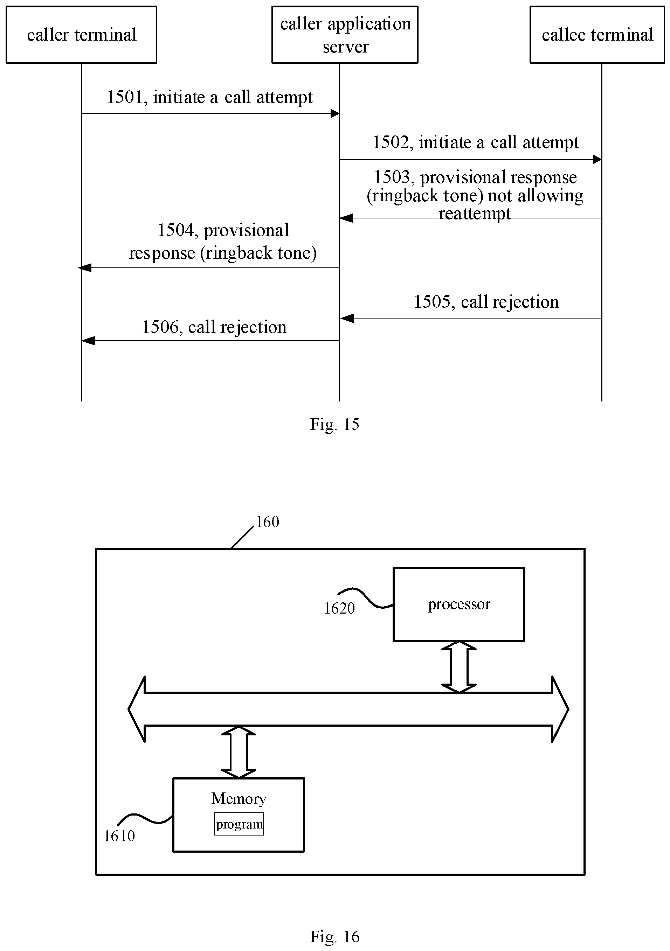

As shown in FIG. 15, the flow chart includes the following steps.

At step 1501, a caller terminal initiates a call, and a "reattempt call" service is triggered in the process of the call.

At step 1502, a caller application server initiates a call to a callee terminal.

At step 1503, the callee terminal returns a provisional response message to the caller application server, where the provisional response message carries a reattempt call restriction service identifier. The reattempt call restriction service identifier can be configured as required.

At step 1504, the caller application server forwards the provisional response message to the caller terminal, the callee terminal rings, and the caller terminal hears a ringback tone or ringback music.

At step 1505, a called subscriber rejects the call, and the callee terminal returns a call rejection message to the caller application server.

The reason for the rejection of the called subscriber may be that an unknown number is displayed and the called subscriber thinks it is a harassment phone call.

At step 1506, because the provisional response message carries the reattempt call restriction service identifier, the caller application server does not initiate a reattempt call and forwards the call rejection message to the caller terminal.

It should be noted that the above step 1505 may also be replaced by: the callee terminal has not answered for longer than a preset time duration.

It should be noted that, in another embodiment, the caller application server forwards the provisional response message to the caller terminal and carries the reattempt call restriction service identifier, and the caller terminal identifies the reattempt call restriction service identifier. When the caller terminal receives the call rejection message or the call is not answered, the caller terminal will not initiate a reattempt call.

Additionally, it should be noted that whether the information carried by the caller application server in a reattempt call can be displayed on a callee terminal depends on whether the callee restricts the display of "caller customized" caller identification. Whether the same caller can be allowed to reattempt a call when a callee declines a call or "does not answer within 20 seconds" depends on whether the callee restricts the "call effectiveness enhancement" or "reattempt call" service.

If the callee has any of the above two restrictions, either still an ordinary caller identification content is displayed in a reattempt call, or the caller AS directly declines the reattempt call.

In order to enhance the effectiveness, the caller AS carries a preset reattempt call restriction service identifier in a first rejection message or ringback tone message, and the preset reattempt call restriction service identifier is used to indicate whether the caller has restricted effective calls or reattempt calls. If the callee restricts effective calls or reattempt calls, the calling AS will not initiate a reattempt call.

In another embodiment, for an intelligent terminal, a callee terminal (callee APP) may also carry the reattempt call restriction service identifier in a rejection message or ringback tone (180 (ring)) message to a network side.

As shown in FIG. 16, an embodiment of the present disclosure provides a call processing device 160 including a memory 1610 and a processor 1620, where the memory 1610 stores a program which, when read and executed by the processor 1620, causes the processor to implement a call processing method according to any of the embodiments.

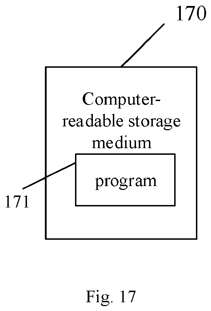

As shown in FIG. 17, an embodiment of the present disclosure provides a computer-readable storage medium 170, where the computer-readable storage medium 170 stores one or more programs 171, and the one or more programs 171 can be executed by one or more processors to implement a call processing method according to any of the embodiments.

According to the scheme provided by this embodiment, the prompt information helps the callee identify whether a call is harassment and then decide whether to answer the call, which can help subscribers effectively screen out harassment phone calls. In contrast with the related technology, according to at least one embodiment of the present disclosure, a reattempt call is initiated to a callee terminal when an initial call has failed, and prompt information to be displayed on the callee terminal is sent during the reattempt call. According to the scheme provided by this embodiment, the prompt information helps the callee identify whether a call is harassment and then decide whether to answer the call, which can help subscribers effectively screen out harassment phone calls.

It can be understood by those skilled in the art that all or some of the steps of the methods, systems and functional modules/units in the devices disclosed above can be implemented as software, firmware, hardware and appropriate combinations thereof. In the hardware implementation, the division between functional modules/units mentioned in the above description does not necessarily correspond to the division of physical components; for example, a physical component may have multiple functions, or a function or step may be performed cooperatively by several physical components. Some or all of the components may be implemented as software executed by a processor, such as a digital signal processor or a microprocessor, or as hardware, or as an integrated circuit, such as an application specific integrated circuit. Such software can be distributed on computer-readable media, which can include computer storage media (or non-transitory media) and communication media (or transitory media). As well known to those of ordinary skill in the art, the term computer storage medium includes volatile and nonvolatile, removable and non-removable media implemented in any method or technology for storing information, such as computer readable instructions, data structures, program modules or other data. A computer storage medium includes, but is not limited to, RAM, ROM, EEPROM, flash memory or other memory technologies, CD-ROM, digital versatile disk (DVD) or other optical disk storage, cassettes, magnetic tapes, magnetic disk storage or other magnetic storage devices, or any other medium that can be configured to store desired information and can be accessed by a computer. Furthermore, it is well known to those of ordinary skill in the art that communication media typically contain computer readable instructions, data structures, program modules or other data in a modulated data signal such as a carrier wave or other transmission mechanism, and can include any information delivery media.

## Claims

1. A call processing method, comprising:
initiating, by a caller application server or a caller terminal, a reattempt call to a callee terminal in response to a call failure, and sending, by the caller application server or the caller terminal, prompt information to be displayed on the callee terminal during the reattempt call (201);
wherein the prompt information is customized prompt information edited by the caller terminal and comprises at least one of: caller identity information or calling purpose information.

2. The call processing method of claim 1, wherein the prompt information comprises at least one of: text information, image information, video information, or audio information.

3. The call processing method of claim 1, wherein the call failure comprises:
an initial call being rejected, or not answered by the callee terminal within a preset time duration.

4. The call processing method of claim 1, wherein the prompt information is registered in the caller application server, or carried in a call attempt message of an initial call by the caller terminal.

5. The call processing method of claim 1, wherein the sending prompt information to be displayed on the callee terminal during the reattempt call comprises:
carrying the prompt information in a call attempt message of the reattempt call.

6. The call processing method of claim 1, wherein the sending prompt information to be displayed on the callee terminal during the reattempt call comprises:
playing the prompt information to the callee terminal during the reattempt call; or
the prompt information comprising first prompt information and second prompt information, carrying the first prompt information in a call attempt message of the reattempt call; and playing the second prompt information to the callee terminal during the reattempt call.

7. The call processing method of claim 6, wherein the playing the prompt information or the second prompt information to the callee terminal during the reattempt call comprises:
carrying a media resource in the call attempt message of the reattempt call; and
after the callee terminal rings, playing the prompt information or the second prompt information to the callee terminal by using the media resource.

8. The call processing method of claim 7, wherein the playing the prompt information or the second prompt information to the callee terminal during the reattempt call comprises:
carrying a first identifier in the call attempt message of the reattempt call, wherein the first identifier is adapted to instruct a callee side to return callee conversation media; and
sending the prompt information or the second prompt information to the callee terminal according to the callee conversation media returned from the callee side.

9. The call processing method of claim 8, wherein the carrying a first identifier in the call attempt message of the reattempt call comprises:
carrying the first identifier in a call attempt message of a reattempt call initiated by the caller terminal, or
carrying the first identifier in a call attempt message of a reattempt call initiated by the caller application server.

10. The call processing method of any one of claims 1 to 9, wherein the initiating a reattempt call to a callee terminal in response to a call failure comprises:
initiating a reattempt call to the callee terminal in response to a call failure and a provisional response message or rejection message received not carrying a preset reattempt call restriction identifier.

11. A computer-readable storage medium (170), wherein the computer-readable storage medium (170) stores at least one program (171) executable by at least one processor (1620) to implement a call processing method of any one of claims 1 to 10.

## Patentansprüche

1. Anrufverarbeitungsverfahren umfassend:
Einleiten, durch einen Anrufer-Anwendungsserver oder ein Anrufer-Endgerät, eines Folgeanrufversuchs an ein Angerufenen-Endgerät als Reaktion auf einen Anruffehler, und Senden, durch den Anrufer-Anwendungsserver oder das Anrufer-Endgerät, von Aufforderungsinformationen, die auf dem Angerufenen-Endgerät während des Folgeanrufversuchs (201) angezeigt werden sollen;
wobei die Aufforderungsinformationen kundenspezifische Aufforderungsinformationen sind, die von dem Anrufer-Endgerät bearbeitet werden, und mindestens eines von Folgenden umfassen: Anrufer-Identitätsinformationen oder Anrufzweckinformationen.

2. Anrufverarbeitungsverfahren nach Anspruch 1, wobei die Aufforderungsinformationen mindestens eines von Folgenden umfassen: Textinformationen, Bildinformationen, Videoinformationen oder Audioinformationen.

3. Anrufverarbeitungsverfahren nach Anspruch 1, wobei der Anruffehler Folgendes umfasst:
ein anfänglicher Anruf wird von dem Angerufenen-Endgerät abgelehnt oder nicht innerhalb einer bestimmten Zeitdauer angenommen.

4. Anrufverarbeitungsverfahren nach Anspruch 1, wobei die Aufforderungsinformationen in dem Anrufer-Anwendungsserver registriert sind oder in einer Anrufversuchsnachricht eines anfänglichen Anrufs durch das Anrufer-Endgerät übermittelt werden.

5. Anrufverarbeitungsverfahren nach Anspruch 1, wobei das Senden von Aufforderungsinformationen, die auf dem Angerufenen-Endgerät während des Folgeanrufversuchs angezeigt werden sollen, folgendes umfasst:
Übermitteln der Aufforderungsinformationen in einer Anrufversuchsnachricht des Folgeanrufversuchs.

6. Anrufverarbeitungsverfahren nach Anspruch 1, wobei das Senden von Aufforderungsinformationen, die auf dem Angerufenen-Endgerät während des Folgeanrufversuchs angezeigt werden sollen, folgendes umfasst:
Abspielen der Aufforderungsinformationen an das Angerufenen-Endgerät während des Folgeanrufversuchs; oder
wenn die Aufforderungsinformationen erste Aufforderungsinformationen und zweite Aufforderungsinformationen umfassen, Übermitteln der ersten Aufforderungsinformationen in einer Anrufversuchsnachricht des Folgeanrufversuchs; und
Abspielen der zweiten Aufforderungsinformationen an das Angerufenen-Endgerät während des Folgeanrufversuchs.

7. Anrufverarbeitungsverfahren nach Anspruch 6, wobei das Abspielen der Aufforderungsinformationen oder der zweiten Aufforderungsinformationen an das Angerufenen-Endgerät während des Folgeanrufversuchs Folgendes umfasst:
Übermitteln einer Medienressource in der Anrufversuchsnachricht des Folgeanrufversuchs; und
nach Klingeln des Angerufenen-Endgeräts, Abspielen der Aufforderungsinformationen oder der zweiten Aufforderungsinformationen an das Angerufenen-Endgerät unter Verwendung der Medienressource.

8. Anrufverarbeitungsverfahren nach Anspruch 7, wobei das Abspielen der Aufforderungsinformationen oder der zweiten Aufforderungsinformationen an das Angerufenen-Endgerät während des Folgeanrufversuchs Folgendes umfasst:
Übermitteln einer ersten Kennung in der Anrufversuchsnachricht des Folgeanrufversuchs, wobei die erste Kennung angepasst ist, um eine Anrufer-Seite anzuweisen, Anrufer-Gesprächsmedien zurückzugeben; und
Senden der Aufforderungsinformationen oder der zweiten Aufforderungsinformationen an das Angerufenen-Endgerät gemäß den Gesprächsmedien, die von der Angerufenen-Seite zurückgegebenen werden.

9. Anrufverarbeitungsverfahren nach Anspruch 8, wobei das Übermitteln einer ersten Kennung in der Anrufversuchsnachricht des Folgeanrufversuchs Folgendes umfasst:
Übermitteln der ersten Kennung in einer Anrufversuchsnachricht eines Folgeanrufversuchs, der von dem Anrufer-Endgerät eingeleitet wird, oder
Übermitteln der ersten Kennung in einer Anrufversuchsnachricht eines Folgeanrufversuchs, der von dem Anrufer-Anwendungsserver eingeleitet wird.

10. Anrufverarbeitungsverfahren nach einem der Ansprüche 1 bis 9, wobei das Einleiten eines Folgeanrufversuchs an ein Angerufen-Endgerät als Reaktion auf einen Anruffehler Folgendes umfasst:
Einleiten eines Folgeanrufversuchs an das Angerufenen-Endgerät als Reaktion auf einen Anruffehler und eine empfangene vorläufige Antwortnachricht oder Ablehnungsnachricht, die keine voreingestellte Folgeanrufversuch-Beschränkungskennung übermittelt.

11. Computerlesbares Speichermedium (170), wobei das computerlesbare Speichermedium (170) mindestens ein Programm (171) speichert, das von mindestens einem Prozessor (1620) ausführbar ist, um ein Anrufverarbeitungsverfahren nach einem der Ansprüche 1 bis 10 zu implementieren.

## Revendications

1. Procédé de traitement des appels, comprenant :
le lancement, par un serveur d'application de l'appelant ou un terminal de l'appelant, d'une nouvelle tentative d'appel vers un terminal de la personne appelée en réponse à un échec de l'appel, et l'envoi, par le serveur d'application de l'appelant ou le terminal de l'appelant, d'informations d'invite à afficher sur le terminal de la personne appelée au cours de la nouvelle tentative d'appel (201) ;
Dans lequel les informations d'invite sont des informations d'invite personnalisées modifiées par le terminal de l'appelant et comprennent l'une des informations suivantes : informations sur l'identité de l'appelant ou informations sur l'objet de l'appel.

2. Procédé de traitement des appels selon la revendication 1, dans lequel les informations d'invite comprennent au moins l'une des informations suivantes : informations textuelles, informations d'image, informations vidéo ou informations audio.

3. Procédé de traitement des appels selon la revendication 1, dans lequel l'échec de l'appel comprend :
le rejet d'un appel initial ou l'absence de réponse de la part du terminal de l'appelant dans un délai prédéfini.

4. Procédé de traitement des appels selon la revendication 1, dans lequel les informations d'invite sont enregistrées dans le serveur d'application de l'appelant ou transmises dans un message de tentative d'appel lors d'un appel initial effectué par le terminal de l'appelant.

5. Procédé de traitement des appels selon la revendication 1, dans lequel l'envoi d'informations d'invite à afficher sur le terminal de la personne appelée au cours de la nouvelle tentative d'appel comprend :
la transmission de l'information d'invite dans un message de tentative d'appel de la nouvelle tentative d'appel.

6. Procédé de traitement des appels selon la revendication 1, dans lequel l'envoi d'informations d'invite à afficher sur le terminal de la personne appelée au cours de la nouvelle tentative d'appel comprend :
la diffusion de l'information d'invite sur le terminal de la personne appelée pendant la nouvelle tentative d'appel ; ou
les informations d'invite comprenant les premières informations d'invite et les deuxièmes informations d'invite, la transmission des premières informations d'invite dans un message de tentative d'appel de la nouvelle tentative d'appel ; et la diffusion des deuxièmes informations d'invite au terminal de la personne appelée pendant la nouvelle tentative d'appel.

7. Procédé de traitement des appels selon la revendication 6, dans lequel la diffusion d'informations d'invite ou des deuxièmes informations d'invite au terminal de la personne appelée au cours de la nouvelle tentative d'appel comprend :
la transmission d'une ressource média dans le message de tentative d'appel de la nouvelle tentative d'appel ; et
une fois que le terminal de la personne appelée sonne, la diffusion des informations d'invite ou des deuxièmes informations d'invite au terminal de la personne appelée est effectuée au moyen de la ressource média.

8. Procédé de traitement des appels selon la revendication 7, dans lequel la diffusion d'informations d'invite ou des deuxièmes informations d'invite au terminal de la personne appelée au cours de la nouvelle tentative d'appel comprend :
la transmission d'un premier identificateur dans le message de tentative d'appel de la nouvelle tentative d'appel, le premier identificateur étant adapté pour demander à une personne appelée de renvoyer le support de conversation de la personne appelée ; et
l'envoi des informations d'invite ou des deuxièmes informations d'invite au terminal de la personne appelée en fonction du support de conversation de la personne appelée renvoyé par la personne appelée.

9. Procédé de traitement des appels selon la revendication 8, dans lequel la transmission d'un premier identificateur dans le message de tentative d'appel de la nouvelle tentative d'appel comprend :
la transmission du premier identificateur dans un message de tentative d'appel d'une nouvelle tentative d'appel initiée par le terminal de l'appelant, ou
la transmission du premier identificateur dans un message de tentative d'appel d'une nouvelle tentative d'appel initiée par le serveur d'application de l'appelant.

10. Procédé de traitement des appels selon l'une quelconque des revendications 1 à 9, dans lequel l'initiation d'une nouvelle tentative d'appel vers un terminal de la personne appelée en réponse à un échec d'appel comprend :
le lancement d'une nouvelle tentative d'appel vers le terminal de la personne appelée en réponse à un échec de l'appel et à un message de réponse provisoire ou à un message de rejet reçu ne comportant pas d'identificateur de restriction de nouvelle tentative d'appel prédéfini.

11. Support de stockage lisible par ordinateur (170), dans lequel le support de stockage lisible par ordinateur (170) permet de stocker au moins un programme (171) exécutable par au moins un processeur (1620) afin de mettre en oeuvre un procédé de traitement des appels selon l'une quelconque des revendication 1 à 10.
